# EUROPEAN PATENT SPECIFICATION

(11) **EP 1 107 338 B1**
(45) Date of publication and mention of the grant of the patent: **18.08.2004**
(21) Application number: 00125329.3
(22) Date of filing: 30.11.2000
(51) Int. Cl.: H01M 4/50

(54) **Lithium manganese compound oxide and non-aqueous electrolyte secondary battery**
Lithiummanganmischoxide und Sekundärbatterie mit Nichtwässrigen-Elektrolyten
Oxyde mixte de manganèse et de lithium et batterie à électrolyte non aqueux

(30) Priority: 30.11.1999 JP 34017399
(43) Date of publication of application: 13.06.2001
(73) Proprietor: NEC CORPORATION, Tokyo (JP)
(72) Inventor: Numata, Tatsuji, Minato-ku, Tokyo (JP); Kanbe, Chika, Minato-ku, Tokyo (JP); Tomioka, Yoshitada, Minato-ku, Tokyo (JP); Shirakata, Masato, Minato-ku, Tokyo (JP)
(74) Representative: Baronetzky, Klaus, Dipl.-Ing.

(56) References cited:
- EP-A- 0 762 521
- US-A- 5 792 442
- US-A- 5 869 208
- PATENT ABSTRACTS OF JAPAN vol. 1999, no. 02, 26 February 1999 (1999-02-26) -& JP 10 294099 A (SONY CORP), 4 November 1998 (1998-11-04)
- PATENT ABSTRACTS OF JAPAN vol. 1999, no. 11, 30 September 1999 (1999-09-30) -& JP 11 157841 A (MITSUI MINING &SMELTING CO LTD), 15 June 1999 (1999-06-15)

## Description

The present invention relates to a lithium manganese compound oxide and a non-aqueous electrolyte secondary battery using the same as a positive electrode active material.

Non-aqueous electrolyte secondary batteries such as lithium ion secondary batteries have been used as powers for mobile phones, note type personal computers, cam coders as the non-aqueous electrolyte secondary batteries have small sizes and large capacities and are of sealed type batteries.

The non-aqueous electrolyte secondary batteries are larger in volume capacitance density or weight capacitance density and higher in output voltage than the aqueous electrolyte secondary battery. For this reason, the non-aqueous electrolyte secondary batteries are highly attractive for application not only to powers for small devices but also to powers for large devices.

The lithium ion secondary battery has a negative electrode made of an active material such as carbon based material which is lithium-doped or lithium-dedoped, and a positive electrode made of a different active material of compound oxide of lithium and transition metal. The negative electrode active material is applied on a stripe-shaped negative electrode collector. The positive electrode active material is applied on a stripe-shaped positive electrode collector. A separator is sandwiched between the positive and negative separators to form a laminated structure. This laminated stricture may be coated with an armor material or be rolled to form a roll structure. The structure is contained in a battery can to form a battery.

As the positive electrode material for the lithium ion secondary battery, lithium cobalt compound oxide or lithium manganese compound oxide has been used. The secondary battery using the lithium manganese compound oxide is larger in deterioration of the characteristics and performances than the secondary battery using the lithium cobalt compound oxide if the secondary batteries are subjected to the charge/discharge cycle tests at a high temperature in the range of 40-60°C.

. A conventional technique for solving the above problem with the secondary battery using the lithium manganese oxide as the positive electrode material is disclosed in Japanese laid-open patent publication No. 7-153496, wherein in order to prevent elution of manganese to electrolyte, the lithium manganese compound oxide is added with at least one oxide selected from BaO, MgO, and CaO for stabilization.

In Japanese laid-open patent publication No. 10-294099, it is disclosed that the non-aqueous electrolyte secondary battery uses a lithium manganese compound oxide which is prepared from a manganese compound having both a sulfur content of not more than 0.6 % by weight and a diffraction peak intensity in a specific range in an X-ray diffraction.

The lithium ion secondary battery using the lithium manganese compound oxide such as lithium manganate as the positive electrode active material is engaged with the problem in deterioration in cyclic characteristics and reduction in reservation capacity which may be caused by variation in properties of the positive electrode active material due to elution of manganese from lithium manganate and also by deposition of eluted manganese on the negative electrode surface or he separator surface as well as by deterioration of the electrolyte.

In the above circumstances, it had been required to develop a novel lithium manganese compound oxide and a novel non-aqueous electrolyte secondary battery free from the above problem.

Accordingly, it is an object of the present invention to provide a novel lithium manganese compound oxide free from the above problems.

It is a further object of the present invention to provide a novel non-aqueous electrolyte secondary battery using a novel lithium manganese compound oxide as a positive electrode active material, wherein the non-aqueous electrolyte secondary battery is free from the above problems.

It is a still further object of the present invention to provide a novel non-aqueous electrolyte secondary battery using a novel lithium manganese compound oxide as a positive electrode active material, wherein the non-aqueous electrolyte secondary battery is superior in charge/discharge cyclic characteristics, preservation characteristics and safety.

The present invention provides a lithium manganese oxide, wherein a content of sulfur is not more than 0.32 % by weight, and an averaged diameter of pores is not less than 120 nanometers, and the lithium manganese oxide is represented by Li₁₊ₓMn_{2-x-y}MyO₄ , where "M" is at least one of metals and 0.032≦x≦0.182 ; 0≦y≦0.2, and also provides a non-aqueous electrolyte secondary battery using the above lithium manganese compound oxide as a positive electrode active material.

The above and other objects, features and advantages of the present invention will be apparent from the following descriptions.

It is also preferable that the averaged diameter of pores is not less than 200 nanometers.

It is also preferable that the content of sulfur is not more than 0.10 % by weight.

It is also preferable that if the lithium manganese oxide is dried in at a temperature of 300°C under an atmospheric pressure and subsequently placed a temperature in the range of 20-24°C and at a relative humidity in the range of 50-60% and for 48 hours, then a moisture content of the lithium manganese oxide is not more than 0.037 % by weight.

The present invention further provides a non-aqueous electrolyte secondary battery having a positive electrode active material comprising a lithium manganese oxide, wherein a content of sulfur is not more than 0.32 % by weight, and an averaged diameter of pores is not less than 120 nanometers, and the lithium manganese oxide is represented by Li₁₊ₓMn_{2-x-y}M_{y}O₄ , where "M" is at least one of metals and 0.032≦x≦0.182 ; 0≦y≦0.2.

It is also preferable that the averaged diameter of pores is not less than 200 nanometers.

It is also preferable that the content of sulfur is not more than 0.10 % by weight.

It is also preferable that if the lithium manganese oxide is dried in at a temperature of 300°C under an atmospheric pressure and subsequently placed a temperature in the range of 20-24°C and at a relative humidity in the range of 50-60% and for 48 hours, then a moisture content of the lithium manganese oxide is not more than 0.037 % by weight.

The method of forming the claimed lithium manganese oxide comprises the steps of : mixing a manganese source and a lithium source to prepare a mixture ; and subjecting the mixture to a baking in an oxygen-containing atmosphere.

It is also preferable that the manganese source and the lithium source are mixed with each other at a ratio of lithium to manganese in the range of 1.05 to 1.30.

It is also preferable that the mixture is baked at a temperature in the range of 600-800°C for 4-12 hours.

It is also preferable to further comprise the step of re-baking the mixture at a temperature in the range of 600-800°C for 4-24 hours.

It is also preferable that the manganese source includes at least one selected from the group consisting of electrolytic manganese dioxides, chemically synthesized manganese dioxides, manganese oxides, and manganese salts.

It is also preferable that the manganese source is prepared by the steps of : subjecting the electrolytic manganese dioxide, Mn₂O₃, and Mn₃O₄ to a heat treatment at a temperature in the range of 200-1000°C in an oxygen-containing atmosphere.

It is also preferable that the manganese source is prepared by the steps of: subjecting the electrolytic manganese dioxide, Mn₂O₃, and Mn₃O₄ to a cleaning with a water having a temperature in the range of 20-40°C ; and carrying out a dry process in vacuum at a temperature of 120°C.

. It is also preferable that the manganese source is prepared by the steps of: subjecting the electrolytic manganese dioxide, Mn₂O₃, and Mn₃O₄ to a heat treatment at a temperature in the range of 200-1000°C in an oxygen-containing atmosphere ; carrying out a cleaning process with a water having a temperature in the range of 20-40°C ; and carrying out a dry process in vacuum.

It is also preferable that the manganese source is prepared by the steps of: subjecting the electrolytic manganese dioxide, Mn₂O₃, and Mn₃O₄ to a cleaning with a water having a temperature in the range of 50-70°C ; and carrying out a dry process in vacuum at a temperature of 120°C.

It is also preferable that the manganese source is prepared by the steps of: subjecting the electrolytic manganese dioxide, Mn₂O₃, and Mn₃O₄ to a heat treatment at a temperature in the range of 200-1000°C in an oxygen-containing atmosphere ; carrying out a cleaning with a water having a temperature in the range of 50-70°C ; and carrying out a dry process in vacuum at a temperature of 120°C.

It is also preferable that the manganese source is prepared by the steps of: subjecting the electrolytic manganese dioxide, Mn₂O₃, and Mn₃O₄ to a cleaning with a diluted aqueous ammonia ; and carrying out a dry process in vacuum at a temperature of 120°C.

It is also preferable that the manganese source is prepared by the steps of : subjecting the electrolytic manganese dioxide, Mn₂O₃, and Mn₃O₄ to a heat treatment at a temperature in the range of 200-1000°C in an oxygen-containing atmosphere ; carrying out a cleaning with a diluted aqueous ammonia ; and carrying out a dry process in vacuum at a temperature of 120°C.

Another method comprises the steps of : subjecting an electrolytic manganese dioxide to a heat treatment at a temperature in the range of 400-900°C in an oxygen-containing atmosphere to transfer the electrolytic manganese dioxide to a manganese oxide comprising one of β -MnO₂ and Mn₂O₃ ; subjecting the manganese dioxide to a water cleaning ; and baking the manganese dioxide together with a lithium compound.

It is also preferable that the manganese dioxide is baked together with the lithium compound at a temperature in the range of 750-900°C in an oxygen-containing atmosphere.

It is also preferable to further comprise the step of : carrying out a re-baking process at a temperature in the range of 500-650°C in an oxygen-containing atmosphere.

The above present inventions were made by having found the facts that, in the battery having the positive electrode of the lithium manganese compound oxide, deterioration in characteristics and performances of the battery at high temperature is caused by deterioration of the host structure of the manganese oxide due to elution of manganese component from the lithium manganese compound oxide and further by deposition of the eluted manganese component. The lithium manganese compound oxide in accordance with the present invention has a modified spinel structure to solve the above problems with the lithium manganese compound oxide having the normal spinel structure.

The improved lithium manganese compound oxide is characterized in that the sulfur content is reduced and an averaged pore diameter of manganese spinel particles is enlarged.

The increase in the average pore diameter of the manganese spinel particles reduces the content of a moisture adsorbed on the spinel particles. An amount of the moisture to be adsorbed on the spinel particles is reduced, even the spinel particles are exposed to an air having the moisture during the manufacturing process for forming the battery. Further, the host structure of the manganese oxide is stabilized. Namely, both the reduction in the amount of the moisture adsorbed on the spinel particles and the stabilization of the host structure of the manganese oxide improve the characteristics and performances of the battery.

As a result, the amount of the moisture introduced into the battery is reduced to prevent the deterioration of the electrolyte of the battery.

The above improved lithium manganese compound oxide of the present invention is also characterized in that the residual amount of sulfur is reduced. Sulfur present in the lithium manganese compound oxide forms lithium sulfate, for which reason if the lithium manganese compound oxide having a large residual sulfur contact is applied to the lithium ion battery, then the residual sulfur traps lithium ions. Accordingly, the reduction in the sulfur content of the lithium manganese compound oxide reduces the number of the traps of the lithium ions, thereby allowing that the lithium ions diffused through the spinel structure of the lithium manganese compound oxide are effectively utilized for reaction in the battery.

The lithium manganese compound oxide used as the positive electrode material for the non-aqueous electrolyte secondary battery may be prepared by mixing a lithium source and a manganese source and subsequently burning the mixture. It is preferable for the lithium source that compounds other than the lithium oxide, which are generated by burning an oxide, a nitride or a hydroxide, may be dispersed in a gaseous state, whereby the lithium oxide only remains.

It is possible to use, as the manganese source, manganese compounds such as electrolytic manganese dioxides, chemically synthesized manganese dioxide, various manganese oxides, for example, Mn₂O₃ and Mn₃O₄, and manganese salts, for example, MnCO₃ and Mn(OH)₂. It is preferable that the electrolytic manganese dioxide is subjected to ammonia for neutralization to acid. It is particularly preferable that the content of the sulfur group is low.

It is also preferable that the manganese source is prepared by the steps of: subjecting the electrolytic manganese dioxide, Mn₂O₃, and Mn₃O₄ to a heat treatment at a temperature in the range of 200-1000°C in an oxygen-containing atmosphere.

It is also preferable that the manganese source is prepared by the steps of: subjecting the electrolytic manganese dioxide, Mn₂O₃, and Mn₃O₄ to a cleaning with a water having a temperature in the range of 20-40°C ; and carrying out a dry process in vacuum at a temperature of 120°C.

It is also preferable that the manganese source is prepared by the steps of: subjecting the electrolytic manganese dioxide, Mn₂O₃, and Mn304 to a heat treatment at a temperature in the range of 200-1000°C in an oxygen-containing atmosphere ; carrying out a cleaning process with a water having a temperature in the range of 20-40°C ; and carrying out a dry process in vacuum.

It is also preferable that the manganese source is prepared by the steps of : subjecting the electrolytic manganese dioxide, Mn₂O₃, and Mn₃O₄ to a cleaning with a water having a temperature in the range of 50-70°C ; and carrying out a dry process in vacuum at a temperature of 120°C.

It is also preferable that the manganese source is prepared by the steps of: subjecting the electrolytic manganese dioxide, Mn₂O₃, and Mn₃O₄ to a heat treatment at a temperature in the range of 200-1000°C in an oxygen-containing atmosphere ; carrying out a cleaning with a water having a temperature in the range of 50-70°C ; and carrying out a dry process in vacuum at a temperature of 120°C.

It is also preferable that the manganese source is prepared by the steps of : subjecting the electrolytic manganese dioxide, Mn₂O₃, and Mn₃O₄ to a cleaning with a diluted aqueous ammonia ; and carrying out a dry process in vacuum at a temperature of 120°C.

It is also preferable that the manganese source is prepared by the steps of : subjecting the electrolytic manganese dioxide, Mn₂O₃, and Mn₃O₄ to a heat treatment at a temperature in the range of 200-1000°C in an oxygen-containing atmosphere ; carrying out a cleaning with a diluted aqueous ammonia ; and carrying out a dry process in vacuum at a temperature of 120°C.

Lithium carbonate is preferable as the lithium source for the lithium manganese compound oxide.

Preferably, in the previous steps to the mixing step for mixing the lithium source and the manganese source, the lithium source material such as lithium carbonate is grounded, and the manganese source such as the electrolytic manganese dioxide is classified, thereby to improve the reactivity and to obtain the lithium manganate with desired particle diameters.

In the mixing step for mixing the lithium source and the manganese source, it is preferable that the manganese source and the lithium source are mixed with each other at a ratio of lithium to manganese in the range of 1.05 to 1.30, and the obtained lithium manganese compound oxide has the compositional ratio represented by Li₁₊ₓMn_{2-x-y}M_{y}O₄ , where "M" is at least one of metals and 0.032≦x≦0.182 ; 0≦y≦0.2, and preferably Li₁₊ₓMn ₂₋ₓO₄, where 0.032≦x≦0.182.

It is also preferable that the mixture of the manganese compound and the lithium compound is baked at a temperature in the range of 600-800°C for 4-12 hours and in the oxygen-containing atmosphere and subsequently the mixture is re-backed in the oxygen-containing atmosphere at a lower temperature in the range of 600-800°C for 4-24 hours.

It is particularly preferable that the electrolytic manganese dioxide as the source material is subjected to a heat treatment in an oxygen-containing atmosphere to transfer the electrolytic manganese dioxide to a manganese oxide comprising β-MnO₂ or Mn₂O₃ before the manganese dioxide is then subjected to a water cleaning or a warm water cleaning to obtain the manganese oxide, so that this manganese oxide is mixed with the lithium source for subsequent baking process at a temperature in the range of 750-900°C in an oxygen-containing atmosphere and further a re-baking process at a temperature in the range of 500-650°C in the oxygen-containing atmosphere to obtain the lithium manganese oxide. Thereafter, this lithium manganese oxide is subjected to a cleaning with an ordinarily water or a warm water and subsequent vacuum dry process at a temperature of 120°C.

The averaged pore diameter of the lithium manganese oxide is preferably not less than 120 nanometers and more preferably not less than 200 nanometers, provided that the averaged pore diameter is measured by a mercury porosimeter method.

The sulfur content of the lithium manganese compound oxide is preferably not more than 0.32 % by weight and more preferably 0.10 % by weight, provided that the sulfur content of the lithium manganese compound oxide is measured in accordance with JIS K1467.

For the non-aqueous electrolyte secondary battery utilizing the improved lithium manganese compound semiconductor as the positive electrode active material, the positive electrode may be formed as follows. Powders of the improved lithium manganese compound oxide, an electrically conductive material for providing an conductivity, a binder and a slurry with a dispersion medium solving the binder are applied on a collector such as an aluminum foil before drying process and roll-compression process to form a film.

The conductive material for providing the conductivity may be a material having a large conductivity and being highly stable in the positive electrode, for example, carbon black, natural black carbon, artificial carbon black and carbon fibers, The binder may preferably be a fluorine resin such as polytetrafluoroethylene and polyvinylidene fluoride. Particularly, polyvinylidene fluoride is preferably as being soluble with a solvent and easy to be mixed into the slurry.

The electrolyte to be used for the non-aqueous electrolyte secondary battery in accordance with the present invention is such that a supporting salt is solved into a non-aqueous solvent. The solvent may be one of carbonates, chlorinated hydrocarbon, ethers, ketones, and nitriles. Preferably, the solvent comprises a mixture of at least one selected from the first groups consisting of high dielectric solvents such as ethylene carbonate, propylene carbonate, and gamma-butyrolactone and of at least one selected from the second groups consisting of low viscosity solvents such as diethyl carbonate, dimethyl carbonate, ethyl methyl carbonate, esters. Particularly, a mixture of ethylene carbonate and diethyl carbonate and a mixture of propylene carbonate and ethyl methyl carbonate are preferable.

The supporting salt may comprise at least one selected from the group consisting of LiClO₄, LiI, LiPF₆, LiAlCl₄, LiBF₄, and CF₃SO₃Li. A concentration of the supporting salt in the solvent is preferably in the range of 0.8-1.5 mol.

The non-aqueous solvent is generally hard to completely remove moisture therefrom, and is likely to adsorb the moisture in the manufacturing process for the battery. It is, therefore, likely that the supporting salt reacts with this slight amount of moisture to generate hydrogen ions. However, the improved lithium manganese compound oxide of the present invention is capable of controlling the entry of the moisture into the battery, thereby preventing the deterioration of the electrolyte of the battery.

The negative electrode active material may be one of lithium, lithium alloys, lithium-doped materials, lithium-dedoped materials, carbon materials such as graphites and amorphous carbon, and metal compound oxides.

The separator may comprise one of a woven fabric, a non-woven fabric, and a porous membrane. A polypropylene or polyethylene porous membrane is preferable as being a thin film and having a large area, a sufficient film strength and a desirable sheet resistance.

The non-aqueous electrolyte secondary battery may have such a structure that alternating laminations of positive and electrodes separated by separators, or a roll of stripe-shaped alternating laminations of positive and electrodes separated by separators. The external shape of the battery may be either a laminated shape, a cylinder shape, a sheet shape, or a disk-shape or any other shape.

### EXAMPLE

### (synthesis of lithium manganese compound oxide)

An electrolytic manganese dioxide was subjected to a neutralization with ammonia to prepare the neutralized electrolytic manganese dioxide which has a sulfur group content of 1.1 % by weight and an ammonium group content of 0.08 % by weight. The electrolytic manganese dioxide was then subjected to heat treatments and cleaning processes under various conditions to prepare various manganese source samples.

Lithium carbonate was grounded to have a center particle diameter D₅₀ of 1.4 micrometers, where D₂₅ = 1.0 micrometers, and D₇₅ = 1.8 micrometers.

Subsequently, the lithium source and the manganese source were mixed with each other at a mole ratio of 2Li/Mn = 1.10, and this mixture was baked in an oxygen-aeration atmosphere at 800°C for 12 hours. This baked mixture was cooled and then re-baked at 650°C for 12 hours. Fine particles of diameters of not more than 1 micrometers were removed from the obtained particles by an air classifier to obtain various lithium manganese oxides different in sulfur content and pore diameter from each other.

### (preparation of cylindrically shaped battery)

Subsequently, the various lithium manganese oxides different in sulfur content and pore diameter from each other were used to prepare various cylindrically shaped batteries through the following process. Preparation of positive electrode :

| Preparation of positive electrode : | |
|---|---|
| Lithium manganese oxide | 90 parts by weight |
| Carbon black | 6 parts by weight |
| Polyvinylidene fluoride | 4 parts by weight |

100 parts by weight of a mixture of the above materials was dispersed into 61 parts by weight of N-methyl-2-porolidone to apply the same onto an aluminum foil having a thickness of 20 micrometers to prepare a positive electrode. Preparation of negative electrode :

| Preparation of negative electrode : | |
|---|---|
| Carbon material (Osaka Gas MCMB) | 90 parts by weight |
| Carbon black | 2 parts by weight |
| Polyvinylidene fluoride | 8 parts by weight |

100 parts by weight of a mixture of the above materials was dispersed into 117 parts by weight of N-methyl-2-porolidone to apply the same onto a copper foil having a thickness of 15 micrometers to prepare a negative electrode.

A porous polyethylene film having a thickness of 25 micrometers was sandwiched between the above obtained positive and negative electrodes to form laminations. The laminations were rolled to form a roll structure. This roll structure was then contained in a cylindrically shaped battery can for 18650-type battery, wherein the cylindrically shaped battery can has a diameter of 10 millimeters and a height of 65 millimeters. A solvent was prepared, which has a volume ratio of ethylene carbonate : diethyl carbonate = 50 : 50 and solved with 1 mol of LiPF₆ as a supporting salt. The solvent was injected into the battery can as electrolyte and the battery can was sealed.

The batteries different in characteristics and properties of the lithium manganese compound oxides were measured in cyclic characteristic and reservation characteristic by the following evaluation methods and measured results are shown on the below table 1.

Samples having the cyclic characteristics of not less than 50% and the reservation characteristic of not less than 70% and having the averaged pore diameter of not less than 120 nanometers were selected. The selected samples but different in sulfur content from each other were further measured in the cyclic characteristic and the reservation characteristic and measured results are shown on the below table 2.

From table 2, it can be understood that as the sulfur content is low, then both the cyclic characteristic and the reservation characteristic are improved. Preferable samples are that the cyclic characteristic is not less than 60% and the reservation characteristic is 80% and the sulfur content is not more than 0.32 % by weight.

Samples different in the re-adsorbed moisture content and the averaged pore diameter from each other were measured in the cyclic characteristic and the reservation characteristic and measured results are shown on the below table 3.

From table 3, it can be understood that as the re-adsorbed moisture content is low, then the battery characteristics and performances are improved. The re-adsorbed moisture content tends to be low as the averaged pore diameter is small. Preferable samples are such that the cyclic characteristic is not less than 50% and the reservation characteristic is 70% and the sulfur content is not more than 0.037 % by weight.

Further, samples having the re-adsorbed moisture content of not more than 0.037 were selected. The selected samples but different in sulfur content from each other were measured in the cyclic characteristic and the reservation characteristic and measured results are shown on the below table 4.

### (evaluation method)

### 1.measurement to pore diameter

0.5g of the lithium manganese compound oxide was delaminated and then placed into measuring cells of a pore diameter distribution measuring device before a pressure was reduced to 93hPa for subsequent injection of mercury to measure the averaged pore diameter by utilizing the following equation.

Averaged pore diameter = 2Vp/Sp, where Vp = the pore volume (m3/g) and Sp = the specific surface area (m2/g), provided that Sp is the cumulative specific surface area assuming that the pore is cylindrically shaped.

### 2.measurement to re-adsorbed moisture content

The lithium manganese compound oxide was dried at a temperature of 300°C in an air for 12 hours and then placed at a temperature of 22°C and a relative humidity of 50% for 48 hours and subsequently heated by a thermo-balance at a temperature rising rate of 2°C/min up to 250°C (TGA-7) to find a reduction in weight for evaluation of the re-adsorbed moisture content.

### 3. measurement to sulfur content

The sulfur content was measured in accordance with a regulation JIS K1467.

### 4. conditions for charge/discharge tests

The prepared batteries were tested under the following conditions.
Charge : after a constant current charge at a charge rate of 1C, a constant voltage charge at 4.2V for 2 hours.
Discharge : a constant current discharge at a discharge rate of 1C.
500 times charge discharge cycles.
Temperature : 50°C.
Rate (%) of variation in capacity at 10th cycle form the original capacity.

### 5. conditions for evaluation in preservation characteristics

Under the above charge/discharge test conditions, the prepared batteries were completely charged at 4.2V and then placed at a temperature of 60°C for 4 weeks and then cooled down to a temperature of 25°C for subsequent discharge to a voltage of 3.0V before the batteries were re-charged and then re-discharged. A rate of variation in discharge capacity after the re-charge and re-discharge to before the placement was represented by percentage.

### 6. conditions for evaluation on rate characteristic

The prepared batteries were once completely charged at 4.2V and then placed at a temperature of 25°C for 10 days and then discharged at discharge rates of 1C and 0.2C to measure the discharge capacity A ratio in discharge capacity of 0.2C discharge rate to 1C discharge rate was found.

**Table 1**

| Averaged pore diameter (nm) | cycle (%) | preservation (%) |
|---|---|---|
| 49 | 21 | 64 |
| 54 | 20 | 59 |
| 81 | 26 | 71 |
| 102 | 39 | 73 |
| 120 | 51 | 79 |
| >200 | 55 | 82 |
| >200 | 48 | 76 |
| >200 | 62 | 87 |

**Table 2**

| Sulfur content (wt-%) | cycle (%) | preservation (%) |
|---|---|---|
| 0.51 | 49 | 76 |
| 0.44 | 51 | 79 |
| 0.43 | 51 | 79 |
| 0.41 | 52 | 79 |
| 0.36 | 57 | 80 |
| 0.32 | 62 | 85 |
| 0.21 | 62 | 87 |
| 0.14 | 63 | 87 |
| 0.10 | 65 | 86 |
| 0.07 | 66 | 88 |

**Table 3**

| re-ad. moisture (wt-%) | av. pore diameter (nm) | cycle (%) | preserve (%) |
|---|---|---|---|
| 0.089 | 66 | 29 | 68 |
| 0.082 | 59 | 31 | 69 |
| 0.064 | 87 | 36 | 71 |
| 0.055 | 89 | 44 | 73 |
| 0.044 | 105 | 49 | 76 |
| 0.037 | 120 | 51 | 79 |
| 0.021 | 160 | 57 | 80 |
| 0.013 | >200 | 62 | 87 |
| 0.007 | >200 | 65 | 86 |
| 0.004 | >200 | 66 | 88 |

**Table 4**

| sulfur (wt-%) | moisture (wt-%) | av. cycle (%) | preserve (%) | rate (%) |
|---|---|---|---|---|
| 0.41 | 0.017 | 52 | 79 | 87.3 |
| 0.36 | 0.033 | 57 | 80 | 90.8 |
| 0.32 | 0.037 | 62 | 85 | 91.9 |
| 0.21 | 0.021 | 62 | 87 | 92.0 |
| 0.14 | 0.010 | 63 | 87 | 92.2 |
| 0.10 | 0.013 | 65 | 86 | 92.2 |
| 0.07 | 0.007 | 66 | 88 | 92.3 |

Whereas modifications of the present invention will be apparent to a person having ordinary skill in the art, to which the invention pertains, it is to be understood that embodiments as shown and described by way of illustrations are by no means intended to be considered in a limiting sense. Accordingly, it is to be intended to cover by claims all modifications which fall within the scope of the present invention.

## Claims

1. A lithium manganese oxide, **characterized in that** a content of sulfur is not more than 0.32 % by weight, and an averaged diameter of pores is not less than 120 nanometers, and said lithium manganese oxide is represented by Li₁₊ₓMn_{2-x-y}M_{y}O₄, where "M" is at least one of metals and 0.032≤x≤0.182; 0≤y≤0.2.

2. The lithium manganese oxide as claimed in claim 1, **characterized in that** said averaged diameter of pores is not less than 200 nanometers.

3. The lithium manganese oxide as claimed in claim 1, **characterized in that** said content of sulfur is not more than 0.10 % by weight.

4. The lithium manganese oxide as claimed in claim 1, **characterized in that** if said lithium manganese oxide is dried in at a temperature of 300°C under an atmospheric pressure and subsequently placed a temperature in the range of 20-24°C and at a relative humidity in the range of 50-60% and for 48 hours, then a moisture content of said lithium manganese oxide is not more than 0.037 % by weight.

5. A positive electrode active material comprising a lithium manganese oxide, **characterized in that** a content of sulfur is not more than 0.32 % by weight, and an averaged diameter of pores is not less than 120 nanometers, and said lithium manganese oxide is represented by Li₁₊ₓMn_{2-x-y}M_{y}O₄, where "M" is at least one of metals and 0.032≤x≤0.182; 0≤y≤0.2.

6. The positive electrode active material as claimed in claim 5, **characterized in that** said averaged diameter of pores is not less than 200 nanometers.

7. The positive electrode active material as claimed in claim 5, **characterized in that** said content of sulfur is not more than 0.10 % by weight.

8. The positive electrode active material as claimed in claim 5, **characterized in that** if said lithium manganese oxide is dried in at a temperature of 300°C under an atmospheric pressure and subsequently placed a temperature in the range of 20-24°C and at a relative humidity in the range of 50-60% and for 48 hours, then a moisture content of said lithium manganese oxide is not more than 0.037 % by weight.

9. A non-aqueous electrolyte secondary battery having a positive electrode active material comprising a lithium manganese oxide, **characterized in that** a content of sulfur is not more than 0.32 % by weight, and an averaged diameter of pores is not less than 120 nanometers, and said lithium manganese oxide is represented by Li₁₊ₓMn_{2-x-y}M_{y}O₄, where "M" is at least one of metals and 0.032≤x≤0.182; 0≤y≤0.2.

10. The non-aqueous electrolyte secondary battery as claimed in claim 9, **characterized in that** said averaged diameter of pores is not less than 200 nanometers.

11. The non-aqueous electrolyte secondary battery as claimed in claim 9, **characterized in that** said content of sulfur is not more than 0.10 % by weight.

12. The non-aqueous electrolyte secondary battery as claimed in claim 9, **characterized in that** if said lithium manganese oxide is dried in at a temperature of 300°C under an atmospheric pressure and subsequently placed a temperature in the range of 20-24°C and at a relative humidity in the range of 50-60% and for 48 hours, then a moisture content of said lithium manganese oxide is not more than 0.037 % by weight.

## Patentansprüche

1. Lithiummanganoxid, **dadurch gekennzeichnet, dass** ein Schwefelgehalt nicht mehr als 0,32 Gew-% beträgt, und ein durchschnittlicher Porendurchmesser nicht kleiner als 120 Nanometer ist, und das Lithiummanganoxid durch Li₁₊ₓMn_{2-x-y}M_{y}O₄ dargestellt wird, wobei "M" wenigstens eines der Metalle und 0,032 ≤ x ≤ 0,182; 0 ≤ y ≤ 0,2 ist.

2. Lithiummanganoxid nach Anspruch 1, **dadurch gekennzeichnet, dass** der durchschnittliche Porendurchmesser nicht kleiner als 200 Nanometer ist.

3. Lithiummangangoxid nach Anspruch 1, **dadurch gekennzeichnet, dass** der Schwefelgehalt nicht mehr als 0,10 Gew-% beträgt.

4. Lithiummanganoxid nach Anspruch 1, **dadurch gekennzeichnet, dass** bei Trocknung des Lithiummanganoxids bei einer Temperatur von 300°C unter atmosphärischem Druck und nachfolgender Lagerung während 48 Stunden bei einer Temperatur im Bereich von 20 bis 24°C und einer relativen Feuchtigkeit im Bereich von 50 bis 60 % der Feuchtigkeitsgehalt des Lithiummanganoxids nicht mehr als 0,037 Gew-% beträgt.

5. Aktive Masse einer positiven Elektrode, welche ein Lithiummanganoxid enthält, **dadurch gekennzeichnet, dass** ein Schwefelgehalt nicht mehr als 0,32 Gew-% beträgt, und ein durchschnittlicher Porendurchmesser nicht kleiner als 120 Nanometer ist, und das Lithiummanganoxid durch Li₁₊ₓMn_{2-x-y}M_{y}O₄ dargestellt wird, wobei "M" wengistens eines der Metalle und 0,032 ≤ x ≤ 0,182; 0 ≤ y ≤ 0,2 ist.

6. Aktive Masse einer positiven Elektrode nach Anspruch 5, **dadurch gekennzeichnet, dass** der durchschnittliche Porendurchmesser nicht kleiner als 200 Nanometer ist.

7. Aktive Masse einer positiven Elektrode nach Anspruch 5, **dadurch gekennzeichnet, dass** der Schwefelgehalt nicht mehr als 0,10 Gew-% beträgt.

8. Aktive Masse einer positiven Elektrode nach Anspruch 5, **dadurch gekennzeichnet, dass** bei Trocknung des Lithiummanganoxids bei einer Temperatur von 300°C unter atmosphärischem Druck und nachfolgender Lagerung während 48 Stunden bei einer Temperatur im Bereich von 20 bis 24°C und einer relativen Feuchtigkeit von 50 bis 60 % ein Feuchtigkeitsgehalt des Lithiummanganoxids nicht mehr als 0,037 Gew-% beträgt.

9. Sekundärbatterie mit einem nichtwässrigen Elektrolyten, die eine aktive Masse der positiven Elektrode aufweist, welche ein Lithiummanganoxid enthält, **dadurch gekennzeichnet, dass** ein Schwefelgehalt nicht mehr als 0,32 Gew-% beträgt, und ein durchschnittlicher Porendurchmesser nicht kleiner als 120 Nanometer ist, und das Lithiummanganoxid durch Li₁₊ₓMn_{2-x-y}M_{y}O₄ dargestellt wird, wobei "M" wengistens eines der Metalle und 0,032 ≤ x ≤ 0,182; 0 ≤ y ≤ 0,2 ist.

10. Sekundärbatterie mit einem nichtwässrigen Elektrolyten nach Anspruch 9, **dadurch gekennzeichnet, dass** der durchschnittliche Porendurchmesser nicht kleiner als 200 Nanometer ist.

11. Sekundärbatterie mit einem nichtwässrigen Elektrolyten nach Anspruch 9, **dadurch gekennzeichnet, dass** der Schwefelgehalt nicht mehr als 0,10 Gew-% beträgt.

12. Sekundärbatterie mit einem nichtwässrigen Elektrolyten nach Anspruch 9, **dadurch gekennzeichnet, dass** bei Trocknung des Lithiummanganoxids bei einer Temperatur von 300°C unter atmosphärischem Druck und nachfolgender Lagerung während 48 Stunden bei einer Temperatur im Bereich von 20 bis 24°C und einer relativen Feuchtigkeit im Bereich von 50 bis 60 % ein Feuchtigkeitsgehalt des Lithiummanganoxids nicht mehr als 0,037 Gew-% beträgt.

## Revendications

1. Oxyde de manganèse et de lithium, **caractérisé en ce que** la teneur en soufre n'est pas supérieure à 0,32% en poids, que le diamètre moyen des pores n'est pas inférieur à 120 nanomètres, et que ledit oxyde de manganèse et de lithium est représenté par Li₁₊ₓMn_{2-x-y}M_{Y}O₄, où « M » est au moins un métal et 0,032 ≤ x ≤ 0,182; 0 ≤ y ≤ 0,2.

2. Oxyde de manganèse et de lithium selon la revendication 1, **caractérisé en ce que** ledit diamètre moyen des pores n'est pas inférieur à 200 nanomètres.

3. Oxyde de manganèse et de lithium selon la revendication 1, **caractérisé en ce que** ladite teneur en soufre n'est pas supérieure à 0,10% en poids.

4. Oxyde de manganèse et de lithium selon la revendication 1, **caractérisé en ce que** si ledit oxyde de manganèse et de lithium est séché à une température de 300°C sous pression atmosphérique et ensuite, placé à une température comprise dans l'intervalle allant de 20 à 24°C, sous une humidité relative comprise dans l'intervalle allant de 50 à 60% et pendant 48 heures, alors la teneur en humidité dudit oxyde de manganèse et de lithium n'est alors pas supérieure à 0,037% en poids.

5. Matériau actif d'électrode positive comprenant un oxyde de manganèse et de lithium, **caractérisé en ce que** la teneur en soufre n'est pas supérieure à 0,32% en poids, que le diamètre moyen des pores n'est pas inférieur à 120 nanomètres, et que ledit oxyde de manganèse et de lithium est représenté par Li₁₊ₓMn_{2-x-y}M_{Y}O₄, où « M » est au moins un métal et 0,032 ≤ x ≤ 0.182 ; 0 ≤ y ≤ 0,2.

6. Matériau actif d'électrode positive selon la revendication 5, **caractérisé en ce que** ledit diamètre moyen des pores n'est pas inférieur à 200 nanomètres.

7. Matériau actif d'électrode positive selon la revendication 5, **caractérisé en ce que** ladite teneur en soufre n'est pas supérieure à 0,10% en poids.

8. Matériau actif d'électrode positive selon la revendication 5, **caractérisé en ce que** si ledit oxyde de manganèse et de lithium est séché à une température de 300°C sous pression atmosphérique et ensuite, placé à une température comprise dans l'intervalle allant de 20 à 24°C, sous une humidité relative comprise dans l'intervalle allant de 50 à 60% et pendant 48 heures, alors la teneur en humidité dudit oxyde de manganèse et de lithium n'est alors pas supérieure à 0,037% en poids.

9. Batterie secondaire à électrolyte non aqueux ayant un matériau actif d'électrode positive comprenant un oxyde de manganèse et de lithium, **caractérisée en ce que** la teneur en soufre n'est pas supérieure à 0,32% en poids, que le diamètre moyen des pores n'est pas inférieur à 120 nanomètres, et que ledit oxyde de manganèse et de lithium est représenté par Li₁₊ₓMn_{2-x-y}M_{Y}O₄, où « M » est au moins un métal et 0,032 ≤ x ≤ 0,182 ; 0 ≤ y ≤ 0,2.

10. Batterie secondaire à électrolyte non aqueux selon la revendication 9, **caractérisée en ce que** ledit diamètre moyen des pores n'est pas inférieur à 200 nanomètres.

11. Batterie secondaire à électrolyte non aqueux selon la revendication 9, **caractérisée en ce que** ladite teneur en soufre n'est pas supérieure à 0,10% en poids.

12. Batterie secondaire à électrolyte non aqueux selon la revendication 9, **caractérisée en ce que** si ledit oxyde de manganèse et de lithium est séché à une température de 300°C sous pression atmosphérique et ensuite, placé à une température comprise dans l'intervalle allant de 20 à 24°C, sous une humidité relative comprise dans l'intervalle allant de 50 à 60% et pendant 48 heures, alors la teneur en humidité dudit oxyde de manganèse et de lithium n'est alors pas supérieure à 0,037% en poids.
